# EUROPEAN PATENT SPECIFICATION

(11) **EP 2 979 595 B1**
(45) Date of publication and mention of the grant of the patent: **21.11.2018**
(21) Application number: 14773927.0
(22) Date of filing: 24.03.2014
(51) Int. Cl.: A47J 37/12, B01D 35/00, A47J 37/04

(54) **FRYING DEVICE**
BRATVORRICHTUNG
DISPOSITIF DE FRITURE

(30) Priority: 25.03.2013 KR 20130031261
(43) Date of publication of application: 03.02.2016
(73) Proprietor: Corporation Daeji C&C, Gyeonggi-do (KR)
(72) Inventor: BANG, Eun Mi, Gyeonggi-do 411-705 (KR)
(74) Representative: Müller-Boré & Partner Patentanwälte PartG mbB
(86) International application number: PCT/KR2014/002426
(87) International publication number: WO 2014/157880

(56) References cited:
- WO-A1-2011/041641
- KR-A- 20050 119 091
- KR-A- 20090 124 667
- KR-A- 20090 124 667
- KR-B1- 100 761 971
- KR-B1- 101 216 631

## Description

### Technical Field

The present invention relates to a frying device, and in particular to a frying device which makes it possible to prevent food sediments from sticking to an upper surface of an inclined, lower plate which belongs to an oil cask, in such a way to circulate oil filled in the inside of the oil cask.

### Background Art

In general, a frying device which uses electricity is used so as to fry meat, for example, a chicken meat, fish, vegetable, etc. in oil, which was previously coated with wheat flour or to fry various breads, for example, donut, croquette, etc. mixed with various sub-materials.

In addition, such a frying device which uses electricity is widely used in various places, for example, a fast food restaurant, a bakery, etc. since a need for fried foods increase thanks to a food and live style change in recent years and an increase in a western style food.

As an example of a conventional frying device which uses electricity, there is a Korean patent registration number 1196864 entitled "a cooking device for frying food" (hereinafter referred to "a conventional cooking device for frying food").

The above conventional cooking device for frying food includes a case providing an inner space; a heating plate arranged inside the case and configured to supply heat; and an oil cask disposed at the case for storing oil for frying, wherein the oil cask includes an oil circulation part formed as an edge of a lower surface thereof protrudes downward, thus providing an oil flow passage therein. The oil cask includes a horizontal surface part wherein a lower surface of an inner portion of the oil circulation part is formed horizontal. The oil flow passage is disposed lower than the height of the bottom surface of the oil cask, and the oil cask and the heating plate are disposed spaced apart from each other at a predetermined distance, thus providing a direct heating way. Inside the oil cask, a heat diffusion plate is arranged horizontal. The heat diffusion plate includes a plurality of holes which are formed at regular intervals.

The conventional cooking device for frying food has advantages in the way that since the lower surface of a frying container is formed horizontal, heat can uniformly transfer to the oil filled in the inside of the oil cask.

However, when the conventional cooking device for frying food is used, sediments which produce when frying foods in oil may remain on the bottom surface of the oil cask, whereupon impurities may stick to the bottom surface of the oil cask, thus causing a unsanitary problem.

In addition, since the impurities stuck to the bottom surface of the oil cask may be heated by heat, and the bottom surface of the oil cask may be oxidized and may turn black, which also causes an unsanitary problem, and service life of the oil cask may decrease.

WO 2011/041641 A1 describes a method and apparatus are provided for cooking. The method includes the steps of providing a bowl and a cooking basket within the bowl for food to be cooked within the cooking basket, said cooking basket having at least one vertical divider extending from a center of the cooking basket to an outer edge, pumping oil into the bowl, heating the oil within the bowl, rotating the basket around a vertical axis within the heated oil, draining the heated oil from the bowl at the end of a predetermined cooking period, filtering the oil as the oil drains from the bowl and spinning the basket to centrifugally remove oil from food within the basket after draining the bowl.

KR 2009 0124667 A describes an ultrasonic frying system provided to improve frying efficiency by combining with a cyclic refiner and rapidly rising temperature of the cooking oil stored in a frying vessel. A fryer including an opening valve at a lower part is mounted at one upper side of a main body. A back filter is installed at the lower part of the opening valve of the fryer. An oil storage hopper is installed at the lower part of the back filter. A pressure pump, and a first and second filter body, which are installed in parallel at another side of the main body, are connected to a sucking pump and a pipe. Another end of the pipe connected to the sucking pump is connected to an oil storage tank installed at an upper part.

### Disclosure of Invention

Accordingly, the present invention is made to resolve the above-mentioned problems.

It is an object of the present invention to provide a frying device wherein it is possible to prevent food sediments from sticking to an upper surface of an inclined, lower plate which belongs to an oil cask in such a way to circulate oil filled in the inside of the oil cask, and a heating temperature of a heater part can be decreased by vibrating oil using an ultrasonic wave vibration part in the inside of the oil cask when frying foods, whereupon it is possible to remove sediments while circulating oil.

It is another object of the present invention to provide a frying device wherein small size sediments included in oil can be removed during a circulation of oil filled in the oil cask.

It is further another object of the present invention to provide a frying device wherein heat can radiate from a heater part installed at both sides of an inner, lower side of the oil cask toward an inner circumferential surface of the oil cask, and an ultrasonic wave vibration part is provided in the center of both heater parts, whereupon heated air can ascend with the aid of natural convection at both sides of the oil cask and can gather in the center, and vibrations can transfer through oil in the center, thus quickly and uniformly cooking foods.

It is still further another object of the present invention to provide a frying device wherein oil filled in the inside of an oil cask can be repeatedly circulated while generating vortex in a clockwise direction or a counterclockwise direction during a frying procedure of foods, whereupon oil can uniformly penetrate into food, thus uniformly cooking foods.

It is still further another object of the present invention to provide a frying device wherein foods can rotate while moving a little during a frying procedure of foods in such a way to move a cooking container filled with foods, thus uniformly cooking foods and preventing foods from being fried stuck to each other.

To achieve the above objects, there is provided a frying device, which may include, but is no limited to, a case which is hollow and includes a circular hole at its upper plate; an oil cask which is arranged passing through the circular hole and includes a circumference fixing shoulder formed at a circumference of its top and fixed at a circumference of the circular hole, a cylindrical pipe the top and bottom of which are open, and an inverted cone shaped inclined, lower plate formed at the open portion of the lower side of the cylindrical pipe, thus forming a discharge hole at a lower portion of the front side; a pair of ultrasonic wave vibration parts which are provided at a front side and a rear side of an inner lower portion of the oil cask; a pair of heater parts which are dispose at both sides of an inner lower portion of the oil cask and are configured to radiate heated air; a sediment collection container which is fixed at a lower portion of the discharge hole while communicating with the oil cask; a filtering circulation part which is disposed between the sediment collection container and the oil cask so as to filter the oil discharging from the sediment collection container and circulate back into the oil cask; and a control part which controls the ultrasonic wave vibration part, the heater parts and the filtering circulation part, wherein an operation part is connected to the control part.

According to the frying device of the present invention, the filtering circulation part may include, but is not limited to, a first pipe which extends from a lower portion of the sediment collection container and includes a control opening and closing valve at its intermediate portion, which is connected to the control part; a filter part which is connected to an end portion of the first pipe and allows to filter sediments; and a second pipe which extends from the filter part and is connected to the top of the cylindrical part of the oil cask and includes a pump at its intermediate portion, which is connected to the control part, and feeds the oil filtered by the filter part back into the oil cask.

In addition, according to the frying device of the present invention, the filtering circulation part comprises a fine filtering filter part at the second pipe which connects the pump and the oil cask.

In addition, according to the frying device of the present invention, each of the heater parts may include, but is not limited to, a body which includes a heat discharge hole at its outer side so as to discharge heat in the direction opposite to the direction where the two heater parts face each other; and a heater which is disposed in the inside of the body and allows to discharge heat based on the supply of electricity.

In addition, according to the frying device of the present invention, there is further provided an oil suction input part which is provided at a circumference of the cylindrical pipe so as to continuously circulate the oil filled in the oil cask with a vortex in a clockwise direction and a counterclockwise direction, and the control part controls the oil suction input part.

In addition, according to the frying device of the present invention, the oil suction input part may include, but is not limited to, a first eruption pipe which is disposed horizontal passing through a circumference of the cylindrical pipe and allows to erupt the oil in a clockwise direction on an inner circumferential surface of the cylindrical pipe; a second eruption pipe which is disposed horizontal passing through a circumference of the cylindrical pipe and allows to erupt the oil in a counterclockwise direction on an inner circumferential surface of the cylindrical pipe; and a normal and reverse direction pump which is installed on an outer circumferential surface of the cylindrical pipe and is connected to the control part, wherein the first eruption pipe and the second eruption pipe are connected through a connection pipe, thus sucking, circulating and inputting the oil filled in the inside of the oil cask.

In addition, according to the frying device of the present invention, there is further provided a food frying container which is installed over a circumference of the top of the oil cask and is submerged in the inside of the oil cask and is filled with foods and is configured to rotate and move while the oil is being inputted from the oil suction input part into the inside of the oil cask.

In addition, according to the frying device of the present invention, the food frying container may include, but is not limited to, a circumference engaging ring which is disposed protruding outward from a circumference of its top, wherein a lower end portion thereof is formed in a shape of a semispherical surface at front and rear sides of a lower portion thereof, and which includes two vertical rods or rollers contacting close with an upper surface of the circumference fixing shoulder; an inverted cone shaped or cylindrical food accommodation container which is formed protruding downward from the inside of the circumference engaging ring, wherein the top of which is open, and the bottom is closed, and the food accommodation container is formed of a mesh or a punched plate; and a plurality of collision wings which are formed protruding outward from an outer circumferential surface of the food accommodation container and are configured to collide with the oil during the input of oil from the oil suction input part to the inside of the oil cask, thus rotating and moving the food accommodation container.

In addition, according to the frying device of the present invention, the collision wings are formed in such a way that the inclined directions are alternately opposite to each other in a circumference direction.

In addition, according to the frying device of the present invention, the circumference fixing shoulder comprises a V-shaped guide groove which is formed in an arc shape on a circumference of its top, wherein a semispherical surface formed at a lower end portion of each of the vertical roads is inserted into the V-shaped guide groove.

In addition, according to the frying device of the present invention, the oil cask comprises an engaging shoulder formed at a circumference of an intermediate portion in the inside of the cylindrical pipe, and the frying device comprises a grill plate G the circumference of which is mounted on the top of the engaging shoulder, so the grill plate G is engaged horizontal at an intermediate portion of the oil cask.

### Advantageous Effects

In the present invention, since it is possible to prevent food sediments from sticking to an upper surface of an inclined, lower plate which belongs to an oil cask during a circulation of oil filled in the inside of the oil cask, foods can be sanitarily fried, and it does not need to clean the inside of the oil cask so as to remove any food sediments, and since any oxidation on a bottom surface of the oil cask can be prevented, service life of the oil cask may be long, and since oil in the inside of the oil cask can vibrate using an ultrasonic wave vibration part, foods can be fried while lowering heating temperature of a heater part, energy consumption may be minimized. To this end, the present invention can provide an energy saving type frying device. Since food sediments can be removed while circulating oil, more sanitary frying may be obtained.

The present invention may provide more sanitary frying in such a way to remove small size sediments contained in oil during a circulation of oil filled in the oil cask.

In the present invention, since heat can be radiated from a heater part provided at both lower sides of the inside of the oil cask to an inner, circumferential surface of the oil cask, and an ultrasonic wave vibration part is provided in the center of both the heater parts, heat may ascends at both sides of the oil cask with the aid of natural convection and may gather in the center, and since vibrations occur in oil, it is possible to more quickly and uniformly cook foods, whereupon good quality fried food can be made.

In the present invention, since vortex may be made in a clockwise direction or a counterclockwise direction in the oil filled in the oil cask, and the coil repeatedly circulates, the oil can be efficiently inputted into the food, thus uniformly heating the food, and the food can be more quickly fried.

In the present invention, since a cooking container in which foods are filled, moves, foods can rotate and can be uniformly cooked when frying the foods. Since it moves finely, the foods can be prevented from sticking to each other, which results in good fried foods.

### Brief Description of Drawings

Figure 1 is a perspective view illustrating a frying device according to the present invention.
Figure 2 is a perspective view illustrating key parts of a frying device according to the present invention.
Figure 3 is a cross sectional view taken along line A-A in Figure 1.
Figure 4 is a cross sectional view taken along line B-B in Figure 3.
Figure 5 is a schematic cross sectional view taken along line C-C in Figure 4.
Figure 6 is a cross sectional view taken along line D-D in Figure 3.
Figure 7A is an enlarged perspective view illustrating a food frying container according to the present invention.
Figure 7B is a perspective view illustrating another type of a food frying container in Figure 7A.
Figure 8 is a schematic plane cross sectional view illustrating an operation state of an oil suction input part according to the present invention.
Figure 9 is a view illustrating a movement state of a food frying container according to the present invention.
Figure 9A is a schematic plane cross sectional view of the present invention.
Figure 9B is a cross sectional view taken along line E-E in Figure 9A.
Figure 9C is a cross sectional view taken along line F-F in Figure 9B.

### Modes for carrying out the invention

The exemplary embodiments of the present invention will be described with reference to the accompanying drawings. The present invention may be implemented in different types, and the exemplary embodiments are not limited to the disclosure.

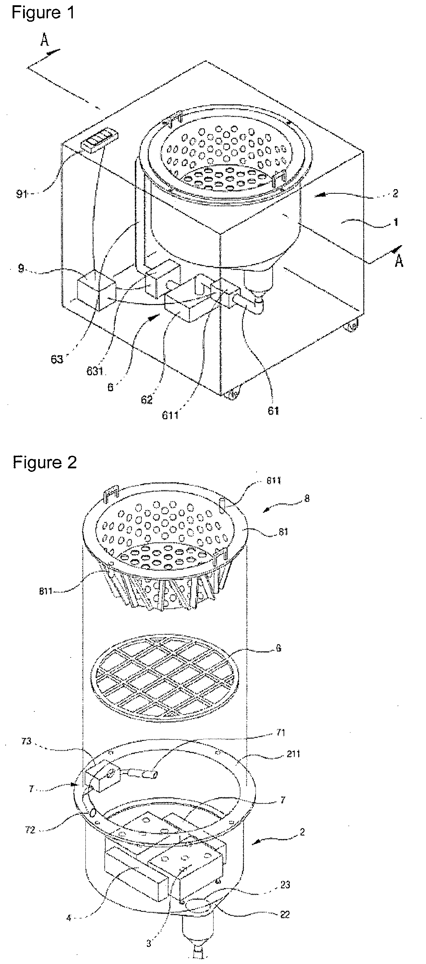

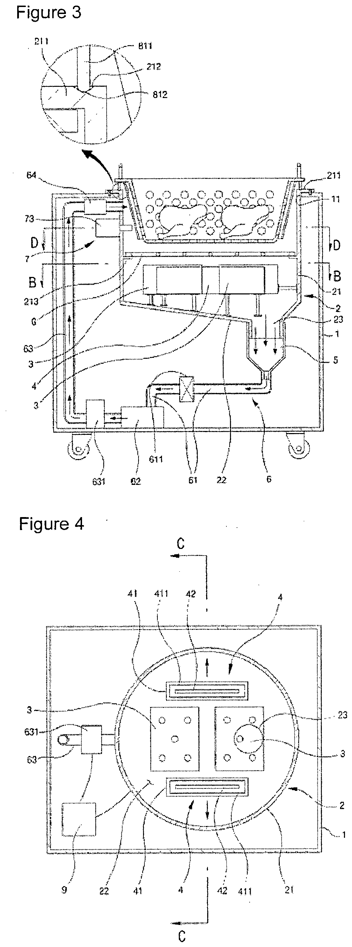

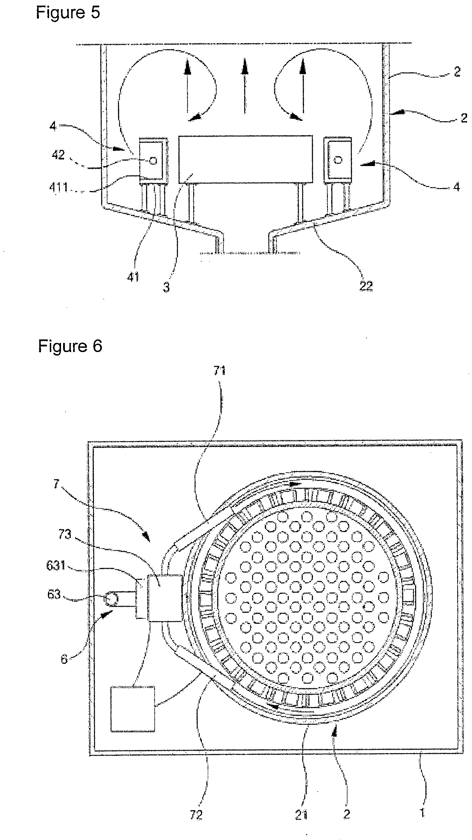

] Figure 1 is a perspective view illustrating a frying device according to the present invention. Figure 2 is a perspective view illustrating key parts of a frying device according to the present invention. Figure 3 is a cross sectional view taken along line A-A in Figure 1. Figure 4 is a cross sectional view taken along line B-B in Figure 3. Figure 5 is a schematic cross sectional view taken along line C-C in Figure 4.

As illustrated therein, the frying device according to the present invention may include, but is not limited to, a case 1 which is hollow and has a circular hole 11 on its upper plate; an oil cask 2 which is arranged passing through the circular hole 11 and is provided in the inside of the case 1; an ultrasonic wave vibration part 3 disposed in the inside of the oil cask 2; a heater part 4 provided in the inside of the oil cask 2; a sediment collection container 5 installed at a discharge portion of the oil cask 2; a filtering circulation part 6 disposed between the sediment collection container 5 and the oil cask 2; and a control part 9 which controls the ultrasonic wave vibration part 3, the heater part 4 and the filtering circulation part 6, wherein an operation part 91 is connected to the control part 9.

The frying device according to the present invention may further include a food frying container 8 which is fixed over the surrounding of the top of the oil container 2 and is submerged in oil. The food frying container 8 is filled with foods and is formed of a mesh or a punched plate in a conical shape or a cylindrical shape.

In addition, as illustrated in Figures 1 to 3, the case 1 is made of a metallic material and may be formed in a rectangular parallelepiped shape. In the attached drawings, a rectangular parallelepiped shape is illustrated. The case 1 is configured to cover the oil cask 2 and the filtering circulation part 6.

The control part 9 is provided in the inside of the case 1. An operation part 91 is provided on top of the case 1 for a user to operate the device with. Movement wheels may be provided on the lower plate of the case 1.

As illustrated in Figures 1 to 3, the oil cask 2 according to the present invention is arranged passing through the circular hole 11 and is provided in the inside of the case 1, and cooking oil (edible oil, etc.) is filled in the inside thereof. It is preferred that the oil cask 2 is made of a metallic material, for example, a stainless, etc. so that the oil cask 2 cannot be deformed by the hot oil.

The oil cask 2 includes a surrounding fixing shoulder 211 which is formed at a surrounding of the top thereof and is fixed at a surrounding of the circular hole 11, and a cylindrical pipe 21 the top and bottom of which are open. In addition, an inclined, lower plate 22 shaped in an inverted cone shape is provided at a lower open portion of the cylindrical pipe 21 so that a discharge hole 23 can be formed eccentric toward a lower side of the front part. It is preferred that a lower circumference of the cylindrical pipe 21 and an upper circumference of the inclined, lower plate 22 are welded.

The inclined, lower plate 22 is installed oblique in an inverted cone shape and eccentric toward the discharge hole 23 and allows to smoothly discharge oil to the discharge hole 23. The inclined, lower plate 22 can prevent food sediments from sticking to an upper surface with the aid of operation of the filtering circulation part 6. This operation will be described later.

As illustrate in Figures 2 to 5, the ultrasonic wave vibration part 3 is provided two in number at a front side and a rear side, respectively, of the inner, lower side of the oil cask 2 so as to vibrate oil filled in the oil cask 2 with the aid of operation of the control part 9. The ultrasonic wave vibration part 3 allows to vibrate oil when electricity is supplied. Since such an ultrasonic wave vibration part 3 is known, the configuration and operation thereof will not be described.

Since the oil can vibrate using the ultrasonic wave vibration part 3, even though heating temperature of the heater part 4 is lowered, oil can penetrate deep into the inside of food with the aid of vibrations. Therefore, the frying device according to the present invention is advantageous to uniform cook foods even though the temperature of oil is lowered to about 100°C to 120°C. Since any oxidation of oil can be prevented, oil can be used fresh for a long time.

Referring to Figures 2 to 5, the heater part 4 of the present invention is provided two in number symmetrically at both sides of an inner, lower portion of the oil cask. Each heater part 4 can radiate heat, thus heating oil filled in the oil cask 2.

The heater part 4 may include, but is not limited to, a body 41 having a heat discharge hole 411 at an outer side thereof so that two heater parts 4 can radiate in the directions opposite to the direction where the two heater parts 4 face, and a heater 42 which is provided inside the body 41 so as to radiate heat based on the supply of electricity.

Since oil vibrates in the inside of the oil cask 2 by the ultrasonic wave vibration part 3, the foods can be fried even when the heating temperature of the heater part 4 is lowered. The present invention is advantageous to provide an energy saving type frying device which is able to minimize the use of energy.

In addition, heat can radiate from the heater part 4 disposed at both sides of an inner, lower portion of the oil cask 2 to an inner circumferential surface of the oil cask 2, and the ultrasonic wave vibration part 3 is provided in the center of the two heater parts 4, so the heat can ascend with the aid of natural convection at both sides of the oil cask 2 and can gather in the center, and oil can vibrate in the center, thus quickly and uniformly cooking foods. Since foods can be more quickly and uniformly cooked, good quality fried food can be cooked.

In addition, as illustrated in Figure 3, the sediment collection container 5 according to the present invention is fixed at a lower side of the discharge hole 23 while communicating with the oil cask 2 and is configured to temporarily collect food sediments which may produce during frying before the filtering circulation part 6 is operated.

The filtering circulation part 6 is formed in a cylindrical shape the top and bottom of which are open. It is preferred that the lower side thereof is configured in an inverted cone shape wherein the top is wide and the bottom is narrow in order for the sediments to be easily discharged.

Referring to Figures 1 to 3, the filtering circulation part 6 is disposed between the sediment collection container 5 and the oil cask 2 to filter the oil discharging from the sediment collection container 5 and circulate into the oil cask 2, thus preventing oil from sticking to an upper surface of the inclined, lower plate 22 of the oil cask 2.

The above filtering circulation part 6 may include, but is not limited to, a first pipe 61 which extends from a lower side of the collection container and includes a control opening and closing valve 611 disposed at its intermediate portion; a filter part 62 connected to an end of the first pipe 61 so as to filter sediment; and a second pipe 63 which is connected to the top of the cylindrical pipe 11 of the oil cask 2 and includes a pump 631 at its intermediate portion and is configured to let the oil filtered by the filter part 62 flow back into the oil cask 2.

The control opening and closing valve 611 is connected to the control part 9 and is configured to open and close the first pipe 61 in accordance with a control signal of the control part 9. The pump 631 is connected to the control part 9 and forcibly circulates the oil through the first pipe 61 and the second pipe in accordance with a control signal of the control part 9. Since the control opening and closing valve 611 and the pump 631 are known, the detailed configuration and operation will be now described.

Therefore, when a user, if necessary, operates the operation part 91 so as to selectively operate the pump 631 of the filtering circulation part 6, an operation cycle is formed, wherein the oil filled in the inside of the oil cask 2 discharges and flows back inside the oil cask 2. When the filtering circulation part 6 operates, the oil filled in the inside of the oil cask 2 flows downward, and the sediment collected on the upper surface of the inclined, lower plate 22 of the oil cask 2 discharges downward on the inclined, lower plate 22, whereupon it is possible to prevent the sediments of foods from sticking to an upper surface of the inclined, lower plate 22.

Since the sediments can be prevented from sticking to an upper surface of the inclined, lower plate 22, it is possible to sanitarily fry foods, and it does not need to clean the inside of the oil cask 2 so as to remove sediments. Since sediments are prevented from remaining on and sticking to the inclined, lower plate 22 of the oil cask 2, it is possible to prevent any oxidation on a lower surface of the oil cask 2, namely, an upper surface of the inclined, lower plate 22 which occurs due to the heating of sediments stuck to the lower plate of the conventional oil cask 2. Therefore, service life of the oil cask 2 can be long, and sanitary frying will be possible.

Meanwhile, a fine filtering filter part 64 may be provided at the second pipe 63 interconnecting the pump 631formn the filtering circulation part 6 and the oil cask 2. The fine filtering filter part 64 is able to filter fine sediments thanks to the more intense meshes of the filtering mesh than the filter part 62. The above fine filtering filter part 64 is known.

Therefore, since the fine sediments contained in the oil can be removed during the circulation of the oil filled in the oil cask 2, more sanitary frying cooking is possible.

The operations of the frying device according to the present invention will be described below.

Referring to Figures 1 to 5, when the frying is performed using the frying device according to the present invention, oil is filled into the inside of the oil cask 2, and the user operates the operation part 91. An operation signal is inputted into the control part 9 so as to operate two heater parts 4 and two ultrasonic wave vibration pats 3.

The oil filled in the oil cask 2 is heated by the operation of the heater parts 4, and the oil vibrates by the operations of the ultrasonic wave vibration parts 3.

Next, the food frying container 8 with the foods being filled in the inside of the oil cask 2 is submerged in the oil. After a predetermined time passes by, the food frying container 8 is removed from the oil cask 2, thus finishing the frying of foods.

During the cooking of the foods performed in the above method, the heater parts 4 provided at both sides of an inner, lower portion of the oil cask 2 radiate heat toward the inner circumferential surface of the oil cask 2. Since the ultrasonic wave vibration parts 3 are provided in the center of the heater parts 4, the heated air ascends at both sides of the oil cask 2 thanks to natural convection and gathers in the center, and vibrations occur in the oil, whereupon the foods can be more quickly and uniformly cooked.

After the frying of the foods is finished in such a method, the user stops the operations of the heater parts 4 and the ultrasonic wave vibration parts 3 by handling the operation part 91.

When the user, if necessary, inputs an operation signal of the filtering circulation part 6 into the control part 9 by operating the operation part 91, the control part 9 operates the control opening and closing valve 611 forming the filtering circulation part 6, and the pump 631, and the sediments in the sediment collection container 5 and the oil in the oil cask 2 are filtered, and only the filtered clean oil is inputted again into the oil cask 2. So, the oil in the inside of the oil cask 2 is circulated and fed back.

When the circulation of the oil is finished in the above method, the control opening and closing valve 611 is closed again by the operation of the operation part 91, and the pump 631 is stopped.

When the filtering circulation part 6 is operated, the oil in the inside of the oil cask 2 moves downward, and the sediments gathered on the upper surface of the inclined, lower plate 22 of the oil cask 2 discharges downward on the upper surface of the inclined, lower plate 22. Therefore, it is possible to prevent food sediments from sticking to the upper surface of the inclined, lower plate 22.

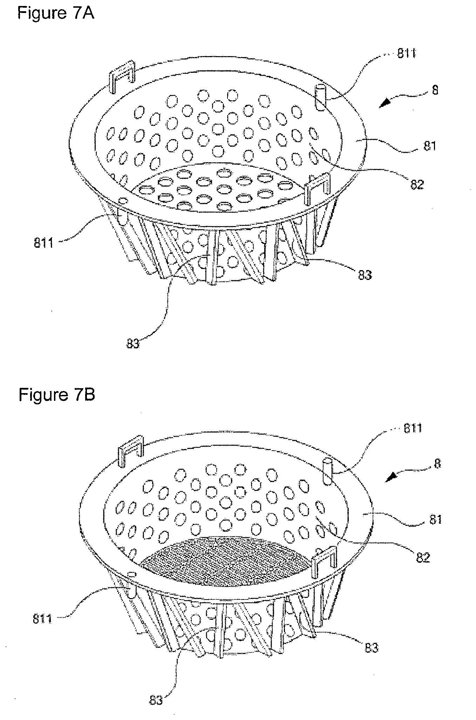

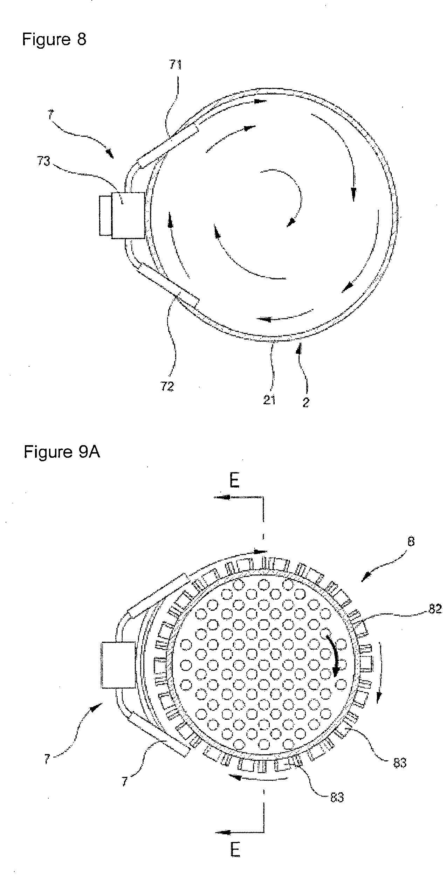

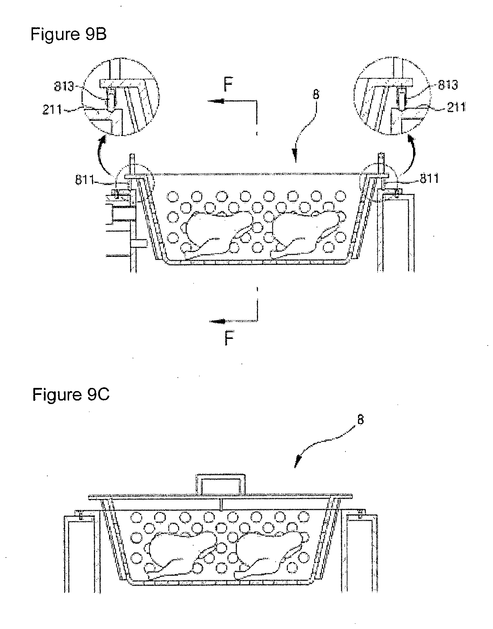

Figure 6 is a cross sectional view taken along line D-D in Figure 3. Figure 7A is an enlarged perspective view illustrating a food frying container according to the present invention. Figure 7B is a perspective view illustrating another type of a food frying container in Figure 7A. Figure 8 is a schematic plane cross sectional view illustrating an operation state of an oil suction input part according to the present invention. Figure 9 is a view illustrating a movement state of a food frying container according to the present invention. Figure 9A is a schematic plane cross sectional view of the present invention. Figure 9B is a cross sectional view taken along line E-E in Figure 9A. Figure 9C is a cross sectional view taken along line F-F in Figure 9B.

Referring to Figures 6, 8 and 9, the frying device according to the present invention may further include an oil suction input part 7 formed at a circumference of the cylindrical pipe 21 and vortexes the oil filled in the oil cask 2. The control part 9 may control the oil suction input part 7.

The oil suction input part 7 is provided at a circumference of the cylindrical pipe 21 and repeatedly vertexes the oil in the oil cask 2 in a clockwise direction or a counterclockwise direction while allowing the oil to penetrate well into the foods and transferring the sediments, which may stick to an inner circumferential surface of the cylindrical pipe 21 toward the bottom using the vortex.

The above oil suction input part 7 may includes, but is not limited to, a first eruption pipe 71 which is disposed horizontal passing through the circumference of the cylindrical pipe 21 in a tangential direction and allows to erupt the oil in a clockwise direction on an inner circumferential surface of the cylindrical pipe 21; and a second eruption pipe 72 which is disposed horizontal passing through the circumference of the cylindrical pipe 21 in a tangential direction and allows to erupt the oil in a counterclockwise direction on an inner circumferential surface of the cylindrical pipe 21. The first eruption pipe 71 and the second eruption pipe 72 are formed oblique in a horizontal state on an inner circumferential surface with respect to the cylindrical pipe so as to erupt the oil on an inner circumferential surface of the cylindrical pipe 21.

In addition, the oil suction input unit 7 may further include a normal and reverse direction pump 73 which is installed on an outer circumferential surface of the cylindrical pipe 21 and is connected to the control part 9, wherein the first eruption pipe 71 and the second eruption pipe 72 are connected thereto through a connection pipe, and the normal and reverse direction pump 73 allows to suck the oil filled in the inside of the oil cask 2 and circulate and input again the oil. The normal and reverse direction pump 73 is configured to rotate in the oil cask 2 in a normal direction (clockwise direction) or a reverse direction (counterclockwise direction) during the frying of foods, thus allowing the oil to uniformly penetrate into the foods.

Therefore, when the normal and reverse direction pump 73 rotates in a normal direction or a reverse direction in accordance with a control signal from the control part 9, the oil of the oil ask 2 is inputted through the second eruption pipe 72, and the oil inputted from the second eruption pipe 72 erupts again into the inside of the oil cask 2 in the first eruption pipe 71, so the oil circulates forming a vortex in a clockwise direction. On the contrary, when the normal and reverse direction pump 73 rotates in a reverse direction in accordance with a control signal of the control part 9, the oil of the oil cask 2 is inputted through the first eruption pipe 71, and the oil inputted from the first eruption pipe 71 erupts again into the inside of the oil cask 2 in the second eruption pipe 72, so the oil circulates forming a vortex in a counterclockwise direction. The control part 9 controls the normal and reverse direction pump 73 to rotate alternately in a normal direction or a reverse direction in accordance with an operation signal of the operation part 91 or a previously set signal.

Therefore, since the oil in the oil cask 2 continuously circulates forming a vortex in a clockwise direction or a counterclockwise direction, namely, since the oil is circulated alternately in a clockwise direction or counterclockwise direction, the oil can efficiently penetrate into the foods, thus quickly frying the foods while uniformly cooking the foods.

Referring to Figures 3, 6, 7A, 7B and 9, the food frying container 8 according to the present invention is submerged in the inside of the oil cask 2 and may be configured to rotate and move during the input of the oil from the oil suction input part 7 into the inside of the oil cask 2.

The food frying container 8 of the present invention may include, but is not limited to, a circumference engaging ring 81 which is disposed protruding outward from a circumference of its top, wherein a lower end portion thereof is formed in a shape of a semispherical surface 812 at front and rear sides of a lower portion thereof, and which includes two vertical rods 811 contacting close with an upper surface of the circumference fixing shoulder 211; and an inverted cone shaped or cylindrical food accommodation container 82 which is formed protruding downward from the inside of the circumference engaging ring 81, wherein the top of which is open, and the bottom is closed, and the food accommodation container 82 is formed of a mesh or a punched plate.

The food frying container 8 may further contain a plurality of collision wings 83 which protrude outward from an outer circumferential surface of the food accommodation container 82 and are configured to collide with the oil which is inputted during the input of the oil from the oil suction input unit 7 into the inside of the oil cask 2, thus allowing the foot accommodation container 8 to rotate and move.

It is preferred that the collision wings 83 are formed in such a way that the inclined directions of the collision wings 83 are alternately opposite to each other in the direction of the circumference of the food frying container 8 so that the collision wings 83 can collide with the oil erupting into the inside of the oil cask 2, thus allowing the oil cask 2 to move while rotating.

Meanwhile, at the circumference of the upper surface of the circumference fixing shoulder 211 forming the oil cask 2, there may be further provided a V-shaped guide groove 212 having a V-shaped cross section which is formed in a circular shape so that the semispherical surface 812 formed at a lower end portion of the vertical rod 811 can be inserted rotatable into the V-shaped guide groove 212.

Therefore, when oil is strongly erupted from the first eruption pipe 71 or the second eruption pipe 72 toward the collision wings 83, the erupted oil collides with the collision wings 83 formed protruding outward from the outer circumferential surface of the food accommodation container 82, whereupon the food frying container 8 rotates along the V-shaped guide groove 212, and at the same time, the both sides of the food frying container 8 minutely move upward and downward about the two vertical rods 811 since each collision wing 83 is inclined. Here, the two vertical rods 812 may be obtained by deforming two rollers 813 which stand vertical. In this case, since the two rollers 813 can move along the guide groove 212, operations can be performed more efficiently.

To this end, the food frying container 8 filled with foods can move, and the foods can minutely vibrate while the foods rotate during the frying of the foods, thus preventing foods from sticking to each other during the frying, and the foods can be uniformly cooked, and god quality fried foods can be obtained.

Meanwhile, an engaging shoulder 213 may be further formed at a circumference at the intermediate portion of the inner side of the cylindrical pipe 21 of the oil cask 2. A grill plate G may be mounted horizontal on the top of the engaging shoulder 213.

The circumference of the grill plate G may be mounted on the engaging shoulder 213, thus being engaged horizontal in the middle of the oil cask 2. Even though foods, for example, chicken, donuts, etc. is inputted in the oil cask 2, it is possible to prevent the foods from dropping down to the bottom of the oil cask 2.

The present invention may be embodied in several forms as defined by the claims, it should also be understood that the above-described examples are not limited by any of the details of the foregoing description, unless otherwise specified, but rather should be construed as defined in the appended claims.

## Claims

1. A frying device, comprising:
a case (1) which is hollow and includes a circular hole (11) at its upper plate;
an oil cask (2) which is arranged passing through the circular hole (11) and includes a circumference fixing shoulder (211) formed at a circumference of its top and fixed at a circumference of the circular hole (11), a cylindrical pipe (21) the top and bottom of which are open, and an inverted cone shaped inclined, lower plate (22) formed at the open portion of the lower side of the cylindrical pipe (21), thus forming a discharge hole (23) at a lower portion of the front side;
a pair of ultrasonic wave vibration parts (3) which are provided at a front side and a rear side of an inner lower portion of the oil cask (2);
a pair of heater parts (4) which are dispose at both sides of an inner lower portion of the oil cask (2) and are configured to radiate heated air;
a sediment collection container (5) which is fixed at a lower portion of the discharge hole (23) while communicating with the oil cask (2);
a filtering circulation part (6) which is disposed between the sediment collection container (5) and the oil cask (2) so as to filter the oil discharging from the sediment collection container (5) and circulate back into the oil cask (2); and
a control part (9) which controls the ultrasonic wave vibration part (3), the heater parts (4) and the filtering circulation part (6), wherein an operation part (91) is connected to the control part (91).

2. The device of claim 1, wherein the filtering circulation part (6) comprises:
a first pipe (61) which extends from a lower portion of the sediment collection container (5) and includes a control opening and closing valve (611) at its intermediate portion, which is connected to the control part (9);
a filter part (62) which is connected to an end portion of the first pipe (61) and allows to filter sediments; and
a second pipe (63) which extends from the filter part (62) and is connected to the top of the cylindrical part of the oil cask (2) and includes a pump (631) at its intermediate portion, which is connected to the control part (9), and feeds the oil filtered by the filter part (62) back into the oil cask (2).

3. The device of claim 2, wherein the filtering circulation part (6) comprises a fine filtering filter part (4) at the second pipe (63) which connects the pump (631) and the oil cask (2).

4. The device of claim 1, wherein each of the heater parts (4) comprises:
a body (41) which includes a heat discharge hole (411) at its outer side so as to discharge heat in the direction opposite to the direction where the two heater parts (4) face each other; and
a heater (42) which is disposed in the inside of the body (41) and allows to discharge heat based on the supply of electricity.

5. The device of any of claims 1 to 4, further comprising an oil suction input part (7) which is provided at a circumference of the cylindrical pipe (21) so as to continuously circulate the oil filled in the oil cask (2) with a vortex in a clockwise direction and a counterclockwise direction, and the control part (9) controls the oil suction input part (7).

6. The device of claim 5, wherein the oil suction input part (7) comprises:
a first eruption pipe (71) which is disposed horizontal passing through a circumference of the cylindrical pipe (21) and allows to erupt the oil in a clockwise direction on an inner circumferential surface of the cylindrical pipe (21);
a second eruption pipe (72) which is disposed horizontal passing through a circumference of the cylindrical pipe (21) and allows to erupt the oil in a counterclockwise direction on an inner circumferential surface of the cylindrical pipe (21); and
a normal and reverse direction pump (73) which is installed on an outer circumferential surface of the cylindrical pipe (21) and is connected to the control part (9), wherein the first eruption pipe (71) and the second eruption pipe (72) are connected through a connection pipe, thus sucking, circulating and inputting the oil filled in the inside of the oil cask (2).

7. The device of claim 6, further comprising:
a food frying container (8) which is installed over a circumference of the top of the oil cask (2) and is submerged in the inside of the oil cask (2) and is filled with foods and is configured to rotate and move while the oil is being inputted from the oil suction input part (7) into the inside of the oil cask (2).

8. The device of claim 7, wherein the food frying container (8) comprises:
a circumference engaging ring (81) which is disposed protruding outward from a circumference of its top, wherein a lower end portion thereof is formed in a shape of a semispherical surface (812) at front and rear sides of a lower portion thereof, and which includes two vertical rods (811) or rollers (813) contacting close with an upper surface of the circumference fixing shoulder (211);
an inverted cone shaped or cylindrical food accommodation container (82) which is formed protruding downward from the inside of the circumference engaging ring (81), wherein the top of which is open, and the bottom is closed, and the food accommodation container (82) is formed of a mesh or a punched plate; and
a plurality of collision wings (83) which are formed protruding outward from an outer circumferential surface of the food accommodation container (82) and are configured to collide with the oil during the input of oil from the oil suction input part (7) to the inside of the oil cask (2), thus rotating and moving the food accommodation container.

9. The device of claim 8, wherein the collision wings (83) are formed in such a way that the inclined directions are alternately opposite to each other in a circumference direction.

10. The device of claim 8, wherein the circumference fixing shoulder (11) comprises a V-shaped guide groove (212) which is formed in an arc shape on a circumference of its top, wherein a semispherical surface (812) formed at a lower end portion of each of the vertical roads (811) is inserted into the V-shaped guide groove (212).

11. The device of claim 1, wherein the oil cask (2) comprises an engaging shoulder (213) formed at a circumference of an intermediate portion in the inside of the cylindrical pipe (21), and the frying device comprises a grill plate (G) the circumference of which is mounted on the top of the engaging shoulder (213), so the grill plate (G) is engaged horizontal at an intermediate portion of the oil cask (2).

## Patentansprüche

1. Brat- bzw. Frittiervorrichtung, die umfasst:
ein Gehäuse (1), das hohl ist und an seiner oberen Platte ein kreisförmiges Loch umfasst;
einen Ölbehälter (2), der durch das kreisförmige Loch (11) gehend eingerichtet ist und umfasst: einen Umfangsbefestigungsabsatz (211), der an einem Umfang seiner Oberseite ausgebildet ist und an einem Umfang des kreisförmigen Lochs (11) befestigt ist, eine zylindrische Rohrleitung (21), deren Ober- und Unterseite offen sind, und eine geneigte untere Platte (22) mit invertierter Kegelform, die an dem offenen Abschnitt der Unterseite der zylindrischen Rohrleitung (21) ausgebildet ist und auf diese Weise ein Abgabeloch (23) an einem unteren Abschnitt der Vorderseite bildet;
ein Paar von Ultraschallwellenschwingteilen (3), die an einer Vorderseite und einer Rückseite eines inneren unteren Abschnitts des Ölbehälters (2) bereitgestellt sind;
ein Paar von Heizungsteilen (4), die auf beiden Seiten eines inneren unteren Abschnitts des Ölbehälters (2) angeordnet sind und aufgebaut sind, um geheizte Luft abzustrahlen;
einen Ablagerungssammelbehälter (5), der an einem unteren Abschnitt des Abgabelochs (23) befestigt ist, während er mit dem Ölbehälter (2) in Verbindung steht;
einen Filterzirkulationsteil (6), der zwischen dem Ablagerungssammelbehälter (5) und dem Ölbehälter (2) angeordnet ist, um das Öl, das von dem Ablagerungssammelbehälter (5) abgegeben wird, zu filtern und zurück in den Ölbehälter (2) zu zirkulieren; und
einen Steuer- bzw. Regelungsteil (9), der den Ultraschallschwingungsteil (3), die Heizungsteile (4) und den Filterzirkulationsteil (6) steuert bzw. regelt, wobei ein Bedienteil (91) mit dem Steuer- bzw. Regelungsteil (91) verbunden ist.

2. Vorrichtung nach Anspruch 1, wobei der Filterzirkulationsteil (6) umfasst:
eine erste Rohrleitung (61), die sich von einem unteren Abschnitt des Ablagerungssammelbehälters (5) erstreckt und in ihrem Zwischenabschnitt ein Steuer- bzw. Regelungsöffnungs- und Schließventil (611), das mit dem Steuer- bzw. Regelungsteil (9) verbunden ist, umfasst;
einen Filterteil (62), der mit einem Endabschnitt der ersten Rohrleitung (61) verbunden ist und ermöglicht, Ablagerungen auszufiltern; und
eine zweite Rohrleitung (63), die sich von dem Filterteil (62) erstreckt und mit der Oberseite des zylindrischen Teils des Ölbehälters (2) verbunden ist und in ihrem Zwischenteil eine Pumpe (631) umfasst, die mit dem Steuer- bzw. Regelungsteil (9) verbunden ist und das von dem Filterteil (62) gefilterte Öl zurück in den Ölbehälter (2) speist.

3. Vorrichtung nach Anspruch 2, wobei der Filterzirkulationsteil (6) einen Feinfilterteil (4) an der zweiten Rohrleitung (63) umfasst, welche die Pumpe (631) und den Ölbehälter (2) verbindet.

4. Vorrichtung nach Anspruch 1, wobei die Heizungsteile (4) umfassen:
einen Körper (41), der ein Wärmeabgabeloch (411) an seiner Außenseite umfasst, um Wärme in die Richtung entgegengesetzt zu der Richtung, wo die zwei Heizungsteile (4) einander gegenüberliegen, umfasst; und
eine Heizung (42), die im Inneren des Körpers (41) angeordnet ist und basierend auf der Zuführung von Elektrizität die Abgabe von Wärme ermöglicht.

5. Vorrichtung nach einem der Ansprüche 1 bis 4, die ferner einen Ölansaugeingangsteil (7) umfasst, der an einem Umfang der zylindrischen Rohrleitung (21) bereitgestellt ist, um das in den Ölbehälter (2) gefüllte Öl kontinuierlich mit einem Strudel in einer Uhrzeigerrichtung und einer Gegenuhrzeigerrichtung zu zirkulieren, und wobei der Steuer- bzw. Regelungsteil (9) den Ölansaugteil (7) steuert bzw. regelt.

6. Vorrichtung nach Anspruch 5, wobei der zweite Öleingangsteil (7) umfasst:
eine erste Austrittsrohrleitung (71), die horizontal durch einen Umfang der zylindrischen Rohrleitung (21) gehend angeordnet ist, und ermöglicht, das Öl in einer Uhrzeigerrichtung auf einer Innenumfangsfläche der zylindrischen Rohrleitung (21) austreten zu lassen;
eine zweite Austrittsrohrleitung (72), die horizontal durch einen Umfang der zylindrischen Rohrleitung (21) gehend angeordnet ist, und ermöglicht, das Öl in einer Gegenuhrzeigerrichtung auf einer Innenumfangsfläche der zylindrischen Rohrleitung (21) austreten zu lassen;
eine Pumpe (73) mit normaler und umgekehrter Richtung, die auf einer Außenumfangsfläche der zylindrischen Rohrleitung (21) installiert ist und mit dem Steuer- bzw. Regelungsteil (9) verbunden ist, wobei die erste Austrittsleitung (71) und die zweite Austrittsleitung (72) durch eine Verbindungsrohrleitung verbunden sind, wobei auf diese Weise das ins Innere des Ölbehälters (2) gefüllte Öl angesaugt, zirkuliert und eingefüllt wird.

7. Vorrichtung nach Anspruch 6, die ferner umfasst:
einen Behälter (8) zum Frittieren von Lebensmitteln, der über einem Umfang der Oberseite des Ölbehälters (2) installiert ist und ins Innere des Ölbehälters (2) eingetaucht ist und mit Lebensmitteln gefüllt ist und aufgebaut ist, um sich zu drehen und zu bewegen, während das Öl von dem Ölansaugteil (7) ins Innere des Ölbehälters (2) eingefüllt wird.

8. Vorrichtung nach Anspruch 7, wobei der Behälter (8) zum Frittieren von Lebensmitteln umfasst:
einen Umfangseingreifring (81), der von einem Umfang seiner Oberseite nach außen vorstehend angeordnet ist, wobei sein unterer Endabschnitt in einer Form einer Halbkugelfläche (812) an Vorder- und Rückseiten seines unteren Abschnitts ausgebildet ist, und der zwei vertikale Stangen (811) oder Rollen (813) umfasst, welche eine obere Fläche des Umfangsbefestigungsabsatzes (211) berühren;
einen invertierten kegelförmigen oder zylindrischen Lebensmittelaufnahmebehälter (82), der von dem Inneren des Umfangseingreifrings (81) nach unten vorstehend ausgebildet ist, wobei seine Oberseite offen ist und die Unterseite geschlossen ist, und wobei der Lebensmittelaufnahmebehälter (82) aus einem Netz oder einem Lochblech ausgebildet ist; und
eine Vielzahl von Aufprallflügeln (83), die von einer Außenumfangsfläche des Lebensmittelaufnahmebehälters (82) nach außen vorstehend ausgebildet sind und aufgebaut sind, um während des Einfüllens von Öl von dem Ölansaugteil (7) ins Innere des Ölbehälters (2) mit dem Öl zusammenzustoßen, wodurch auf diese Weise der Lebensmittelaufnahmebehälter gedreht und bewegt wird.

9. Vorrichtung nach Anspruch 8, wobei die Aufprallflügel (83) in einer derartigen Weise ausgebildet sind, dass die Neigungsrichtungen in einer Umfangsrichtung abwechselnd entgegengesetzt zueinander sind.

10. Vorrichtung nach Anspruch 8, wobei der Umfangsbefestigungsabsatz (11) eine V-förmige Führungsnut (212) umfasst, die in einer Bogenform auf einem Umfang seiner Oberseite ausgebildet ist, wobei eine Halbkugelfläche (812) an einem unteren Endabschnitt jeder der vertikalen Stangen (811) ausgebildet ist und in die V-förmige Führungsnut (212) eingesetzt ist.

11. Vorrichtung nach Anspruch 1, wobei der Ölbehälter einen Eingreifabsatz (213) umfasst, der an einem Umfang eines Zwischenabschnitts im Inneren der zylindrischen Rohrleitung (21) ausgebildet ist, und wobei die Frittiervorrichtung eine Grillplatte (G) umfasst, deren Umfang auf die Oberseite des Eingreifabsatzes (213) montiert ist, so dass die Grillplatte (G) an einem Zwischenabschnitt des Ölbehälters (2) horizontal in Eingriff ist.

## Revendications

1. Dispositif de friture comportant :
une enceinte (1) qui est creuse et inclut un trou circulaire (11) au niveau de sa plaque supérieure ;
un fût d'huile (2) qui est agencé en passant à travers le trou circulaire (11) et inclut un épaulement de fixation de circonférence (211) constitué au niveau d'une circonférence de son dessus et fixé au niveau d'une circonférence du trou circulaire (11), une conduite cylindrique (21) dont le dessus et le fond sont ouverts et une plaque inférieure (22) inclinée en forme de cône inversé, constituée au niveau de la portion ouverte du côté inférieur de la conduite cylindrique (21), formant ainsi un trou de décharge (23) au niveau d'une portion inférieure du côté avant ;
une paire de parties vibration d'ondes ultrasonores (3) qui sont prévues au niveau d'un côté avant et d'un côté arrière d'une portion inférieure intérieure du fût d'huile (2) ;
une paire de parties chauffage (4) qui sont disposées des deux côtés d'une portion inférieure intérieure du fût d'huile (2) et sont conçues pour rayonner de l'air chauffé ;
un récipient de collecte de sédiments (5) qui est fixé au niveau d'une portion inférieure du trou de décharge (23), tout en communiquant avec le fût d'huile (2) ;
une partie circulation de filtrage (6) qui est disposée entre le récipient de collecte de sédiments (5) et le fût d'huile (2) de manière à filtrer l'huile déchargée du récipient de collecte de sédiments (5) et à la faire recirculer dans le fût d'huile (2) ; et
une partie de commande (9) qui commande la partie vibration d'ondes ultrasonores (3), les parties chauffage (4) et la partie circulation de filtrage (6), dans lequel une partie d'opération (91) est raccordée à la partie de commande (91).

2. Dispositif selon la revendication 1, dans lequel la partie circulation de filtrage (6) comporte :
une première conduite (61) qui s'étend depuis une portion inférieure du récipient de collecte de sédiments (5) et inclut une valve d'ouverture et de fermeture de commande (611) au niveau de sa portion intermédiaire qui est raccordée à la partie de commande (9) ;
une partie filtre (62) qui est raccordée à une portion d'extrémité de la première conduite (61) et permet de filtrer des sédiments ; et
une seconde conduite (63) qui s'étend à partir de la partie filtre (62) et est raccordée au dessus de la partie cylindrique du fût d'huile (2) et inclut une pompe (631) au niveau de sa portion intermédiaire qui est raccordée à la partie de commande (9) et renvoie l'huile filtrée par la partie filtre (62) dans le fût d'huile (2).

3. Dispositif selon la revendication 2, dans lequel la partie circulation de filtrage (6) comporte une partie filtre pour filtrage fin (4) au niveau de la seconde conduite (63) qui raccorde la pompe (631) au fût d'huile (2).

4. Dispositif selon la revendication 1, dans lequel chacune des parties chauffage (4) comporte :
un corps (41) qui inclut un trou de décharge de chaleur (411) au niveau de son côté extérieur de manière à décharger de la chaleur dans la direction opposée à la direction dans laquelle les deux parties chauffage (4) sont face l'une à l'autre ; et
un chauffage (42) qui est disposé à l'intérieur du corps (41) et permet de décharger de la chaleur sur la base de l'alimentation en électricité.

5. Dispositif selon l'une quelconque des revendications 1 à 4, comportant en outre une partie entrée d'aspiration d'huile (7) qui est prévue au niveau d'une circonférence de la conduite cylindrique (21) de manière à faire circuler en continu l'huile injectée dans le fût d'huile (2) avec un tourbillon dans un sens horaire et un sens anti-horaire et la partie commande (9) commande la partie entrée d'aspiration d'huile (7).

6. Dispositif selon la revendication 5, dans lequel la partie entrée d'aspiration d'huile (7) comporte :
une première conduite d'éruption (71) qui est disposée horizontale, passant à travers une circonférence de la conduite cylindrique (21) et permet une éruption de l'huile dans un sens horaire sur une surface circonférentielle intérieure de la conduite cylindrique (21) ;
une seconde conduite d'éruption (72) qui est disposée horizontale, passant à travers une circonférence de la conduite cylindrique (21) et permet une éruption de l'huile dans un sens anti-horaire sur une surface circonférentielle intérieure de la conduite cylindrique (21) ; et
une pompe (73) en direction normale et inversée qui est installée sur une surface circonférentielle extérieure de la conduite cylindrique (21) et est raccordée à la partie commande (9), dans lequel la première conduite d'éruption (71) et la seconde conduite d'éruption (72) sont raccordées à travers une conduite de raccordement, ce qui permet d'aspirer, de faire circuler et d'injecter l'huile remplie dans l'intérieur du fût d'huile (2).

7. Dispositif selon la revendication 6, comportant en outre :
un récipient de friture d'aliments (8) qui est installé sur une circonférence du dessus du fût d'huile (2) et est immergé à l'intérieur du fût d'huile (2) et est rempli d'aliments et conçu pour tourner et se déplacer tandis que l'huile est en cours d'injection à partir de la partie entrée d'aspiration d'huile (7) dans l'intérieur du fût d'huile (2).

8. Dispositif selon la revendication 7, dans lequel le récipient de friture d'aliments (8) comporte :
une bague de mise en prise de circonférence (81) qui est disposée faisant saillie vers l'extérieur à partir d'une circonférence de son dessus, dans lequel une portion d'extrémité inférieure de celle-ci est constituée selon une forme de surface hémisphérique (812) au niveau de côtés avant et arrière d'une portion inférieure de celle-ci et qui inclut deux tiges verticales (811) ou rouleaux (813) venant en contact proche avec une surface supérieure de l'épaulement de fixation de circonférence (211) ;
un récipient de réception d'aliments (82) cylindrique ou en forme de cône inversé qui est constitué faisant saillie vers le bas à partir de l'intérieur de la bague de mise en prise de circonférence (81), dans lequel le dessus de celui-ci est ouvert et le fond est fermé et le récipient de réception d'aliments (82) est constitué sur un maillage ou une plaque perforée ; et
une pluralité d'ailettes de collision (83) qui sont constituées faisant saille vers l'extérieur à partir d'une surface circonférentielle extérieure du récipient de réception d'aliments (82) et qui sont conçues pour entrer en collision avec l'huile pendant l'entrée d'huile depuis la partie entrée d'aspiration d'huile (7) vers l'intérieur du fût d'huile (2), faisant ainsi tourner et déplaçant le récipient de réception d'aliments.

9. Dispositif selon la revendication 8, dans lequel les ailettes de collision (83) sont constituées de sorte que les sens inclinés soient alternativement opposés l'un à l'autre dans une direction circonférentielle.

10. Dispositif selon la revendication 8, dans lequel l'épaulement de fixation de circonférence (11) comporte une rainure de guidage en V (212) qui est constituée en une forme d'arc sur une circonférence de son dessus, dans lequel une surface hémisphérique (812) constituée au niveau d'une portion d'extrémité inférieure de chacune des tiges verticales (811) est insérée dans la rainure de guidage en V (212).

11. Dispositif selon la revendication 1, dans lequel le fût d'huile (2) comporte un épaulement de mise en prise (213) constitué au niveau d'une circonférence d'une portion intermédiaire à l'intérieur de la conduite cylindrique (21) et le dispositif de friture comporte une plaque de gril (G) dont la circonférence est montée sur le dessus de l'épaulement de mise en prise (213), de sorte que la plaque de gril (G) soit en prise horizontale au niveau d'une portion intermédiaire du fût d'huile (2).
